# FASCICULE DE BREVET EUROPEEN

(11) **EP 3 717 988 B1**
(45) Date de publication et mention de la délivrance du brevet: **17.07.2024**
(21) Numéro de dépôt: 18799550.1
(22) Date de dépôt: 13.11.2018
(51) Int. Cl.: G06F 3/01, G05B 19/42, G05B 19/427, B25J 13/02, B25J 9/16, G06F 3/023, G06F 3/02

(54) **PROCEDE DE COMMANDE D'UN ROBOT DE MANIPULATION ET DISPOSITIF METTANT EN OEUVRE UN TEL PROCEDE**
VERFAHREN ZUR STEUERUNG EINES HANDHABUNGSROBOTERS UND VORRICHTUNG ZUR DURCHFÜHRUNG DES VERFAHRENS
METHOD FOR CONTROLLING A HANDLING ROBOT AND DEVICE IMPLEMENTING SUCH A METHOD

(30) Priorité: 27.11.2017 FR 1761237
(43) Date de publication de la demande: 07.10.2020
(73) Titulaire: Commissariat à l'Energie Atomique et aux Energies Alternatives, 75015 Paris (FR)
(72) Inventeur: GEFFARD, Franck, 91400 Orsay (FR)
(74) Mandataire: Cabinet Boettcher
(86) Numéro de dépôt international: PCT/EP2018/081132
(87) Numéro de publication internationale: WO 2019/101584

(56) Documents cités:
- WO-A1-2017/178469
- US-A1- 2008 052 643
- US-A1- 2013 050 458
- US-B1- 9 381 645
- US-B1- 9 607 506
- LEE C: "LEARNING REDUCED-DIMENSION MODELS OF HUMAN ACTIONS", THESIS SUBMITTED IN PARTIAL FULFILLMENT OF THE REQUIREMENTS FORTHE DEGREE OF DOCTOR OF PHILOSOPHY IN ROBOTICS . CARNEGIE MELLONUNIVERSITY, XX, XX, 1 May 2000 (2000-05-01), pages I, III, V, VII - XIV, 01, XP001158919

## Description

### DOMAINE DE L'INVENTION

L'invention s'applique au domaine des robots de manipulation, et plus particulièrement aux procédés de commande des robots de comanipulation.

### ARRIERE PLAN DE L'INVENTION

Les robots de comanipulation permettent à un opérateur de manipuler une pièce directement avec l'aide du robot : c'est-à-dire que l'opérateur et le robot vont agir conjointement sur la pièce.

Il existe des robots de comanipulation dont le point de jonction au robot est équipé de capteurs permettant de mesurer les efforts appliqués par un opérateur à la pièce à manipuler. De tels robots sont généralement asservis en effort pour déplacer la pièce à manipuler de façon à réduire, jusqu'à les annuler, les efforts qui sont appliqués par l'opérateur sur la pièce à manipuler. La transmission de l'intention de l'opérateur se fait alors au travers de la pièce à manipuler dont la souplesse et les caractéristiques géométriques perturbent l'acquisition par le robot de l'intention de l'opérateur. Ainsi, lors de la manipulation d'une grande pièce, il est difficile de discriminer un mouvement de translation appliqué par l'opérateur sur la pièce à manipuler d'un mouvement de rotation. Ceci est vrai que le robot soit réversible, ou équipé de moyens de mesure d'effort. L'inertie de l'objet est également un facteur qui perturbe l'acquisition par le robot du mouvement souhaité (il est nécessaire de déplacer un peu la pièce pour que le capteur puisse mesurer quelque chose).

Il existe également des robots pour lesquels la mesure d'effort est réalisée par des capteurs d'effort articulaires. Le système de commande est sensiblement le même et les difficultés sont identiques à ceux décrits ci-dessus. Ces mêmes difficultés sont aussi rencontrées lorsque le robot est mécaniquement réversible et qu'il n'est alors pas indispensable, à priori, de disposer d'une mesure d'effort.

Il existe également des robots de comanipulation dont la commande comprend une interface de manipulation située au niveau de la prise de l'opérateur sur la pièce à manipuler et pourvue de capteurs d'effort et de mouvement. Ce type de commande souffre d'instabilité lorsque l'on souhaite réaliser une boucle d'asservissement car la transmission du déplacement se fait au travers de la pièce à manipuler. L'ambiguïté entre rotation et translation subsiste. Enfin, il est nécessaire de connaître la distance séparant l'interface de manipulation du robot, sauf à se limiter à des mouvements très simples.

La mesure des efforts se fait le plus souvent par la mesure de la déformation d'un corps d'épreuve, via des jauges de contraintes, des capteurs optiques, des capteurs inductifs, des capteurs capacitifs, ou des matériaux piézorésistif.

Des systèmes de co-manipulation, équipés de ces capteurs existent dans certains laboratoires ou dans l'industrie, et les commandes évoquées ci-dessus sont appliquées à partir des mesures issues de ces capteurs, soit via une boucle d'effort seule, soit via des boucles de position et/ou vitesse en parallèle, ou en série avec la boucle d'effort (commande en effort interne ou externe) .

Dans toutes les solutions de commande évoquées ci-dessus, outre les problèmes d'ambiguïté de manipulation et d'instabilité, la précision de la mesure des efforts, en amplitude et en direction, conditionne directement la qualité de la commande du robot (le robot doit fuir l'effort dans la bonne direction et avec la bonne amplitude), ce qui contraint le choix des solutions de mesure, et surtout des corps d'épreuve.

De l'état de l'art sont connus encore d'autres dispositifs de commande de robot et dispositifs d'interaction gestuelle, tels que ceux décrits dans les documents US 9607506 B1, WO 2017/178469 A1, US 9381645 B1, US 2013/050458 A1, US 2008/052643 A1, ainsi que dans le document de Christopher Lee "LEARNING REDUCED-DIMENSION MODELS OF HUMAN ACTIONS", Thesis Submitted in partial fulfillment of the requirements for the degree of Doctor of Philosophy in Robotics, The Robotics Institute Carnegie Mellon University, 1 may 2000 (2000-05-01).

### OBJET DE L'INVENTION

L'invention a pour but de proposer un procédé de commande d'un robot de manipulation intuitif permettant d'améliorer la discrimination entre différents mouvements que l'opérateur imprime à la pièce à manipuler.

### RESUME DE L'INVENTION

A cet effet, on prévoit, selon l'invention, un procédé de commande d'un robot, le robot étant relié à une interface de commande comportant un gant comprenant un premier doigt pourvu d'un premier capteur de contact et un deuxième doigt pourvu d'un deuxième capteur de contact, le procédé comprenant les étapes définies dans la revendication 1.

On obtient alors un procédé de commande particulièrement intuitif qui ne requiert pas de connaître l'orientation de l'effort ou la distance séparant l'opérateur du point de liaison de la pièce à manipuler au robot pour les robots de manipulation. La discrimination entre une instruction de rotation et une instruction de translation se faisant sur la base d'une combinaison de signaux, celle-ci est aisée. Le procédé de commande permet également d'être moins dépendant de la qualité de la mesure d'effort et ainsi de pouvoir potentiellement diminuer le coût du système, tout en conservant une bonne manipulabilité du système.

La commande des robots de manipulation est facilitée lorsque la première consigne et/ou la deuxième consigne est un vecteur vitesse, un déplacement ou un effort.

Le nombre de mouvements qu'il est possible de commander est augmenté lorsque le gant comprend un troisième et/ou un quatrième et/ou un cinquième doigt respectivement pourvu d'un troisième et/ou un quatrième et/ou un cinquième capteur de contact, la bibliothèque de signaux comprenant des combinaisons enregistrées de signaux comportant au moins un signal d'au moins l'un du troisième, du quatrième et du cinquième capteur.

On améliore significativement le caractère intuitif du procédé de commande lorsque le gant comprend également un capteur de contact situé sur la paume du gant et/ou des moyens de mesure d'une orientation du gant. Avantageusement, les moyens de mesure d'une orientation du gant comprennent une centrale inertielle.

Selon un mode de réalisation particulièrement avantageux, au moins l'un des premier et deuxième capteurs de contact comprend un capteur de pression. Le caractère intuitif du procédé est amélioré lorsque l'étape préparatoire comprend une étape d'acquérir une première ou une deuxième combinaison de signaux en provenance des capteurs du gant et une étape d'acquérir un premier ou un deuxième vecteur vitesse appliqué sur le robot de manipulation. Avantageusement, l'étape préparatoire comprend également une étape de commander le robot de manipulation pour qu'il reproduise le premier ou deuxième vecteur vitesse suivie d'une étape de validation de l'association de la combinaison de signaux en provenance des capteurs du gant avec le vecteur vitesse appliqué sur le robot de manipulation.

Le caractère intuitif du procédé est encore amélioré lorsque la bibliothèque de signaux comprend une pluralité de combinaisons de signaux associés à un même vecteur vitesse.

Le procédé de commande est particulièrement intuitif lorsque l'étape c) de comparer la combinaison de signaux acquise avec les combinaisons enregistrées dans la bibliothèque de signaux comprend une étape supplémentaire c') de proposer la combinaison enregistrée la plus proche de la combinaison de signaux acquise lorsque la combinaison de signaux acquise ne correspond à aucune des combinaisons enregistrées dans la bibliothèque de signaux.

L'invention concerne également un gant de manipulation comprenant un premier doigt pourvu d'un premier capteur de contact et un deuxième doigt pourvu d'un deuxième capteur de contact ainsi que des moyens de liaison fonctionnelle avec une unité de commande agencée pour mettre en œuvre le procédé selon invention.

Avantageusement, les moyens de liaison fonctionnelle avec une unité de commande comprennent des moyens de communication sans fil.

L'invention concerne également un dispositif de manipulation comprenant un robot, une interface de commande comportant un gant de manipulation et une unité de commande fonctionnellement reliée à l'interface de manipulation et au robot, l'unité de commande étant agencée pour mettre en oeuvre le procédé de commande selon l'invention.

Avantageusement, le robot est un robot de manipulation.

Un dispositif dans lequel le robot est un exosquelette offre également un progrès notables par rapport aux exosquelettes existants.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures annexées parmi lesquelles :
- la figure 1 est un vue schématique d'un dispositif de manipulation selon l'invention ;
- la figure 2 est une représentation schématique d'un gant de manipulation selon un premier mode de réalisation de l'invention ;
- la figure 3 est une représentation schématique d'une bibliothèque de signaux selon un premier mode de réalisation de l'invention ;
- les figures 4 à 6 sont des représentations schématiques du dispositif de manipulation de la figure 1 selon diverses configurations de commande du procédé de commande selon l'invention ;
- la figure 7 est une représentation schématique d'un gant de manipulation selon un deuxième mode de réalisation de l'invention ;
- la figure 8 est une représentation schématique d'une bibliothèque de signaux selon un premier mode de réalisation de l'invention ;
- la figure 9 est une représentation schématique d'une configuration particulière du gant de manipulation selon un troisième mode de réalisation de l'invention.

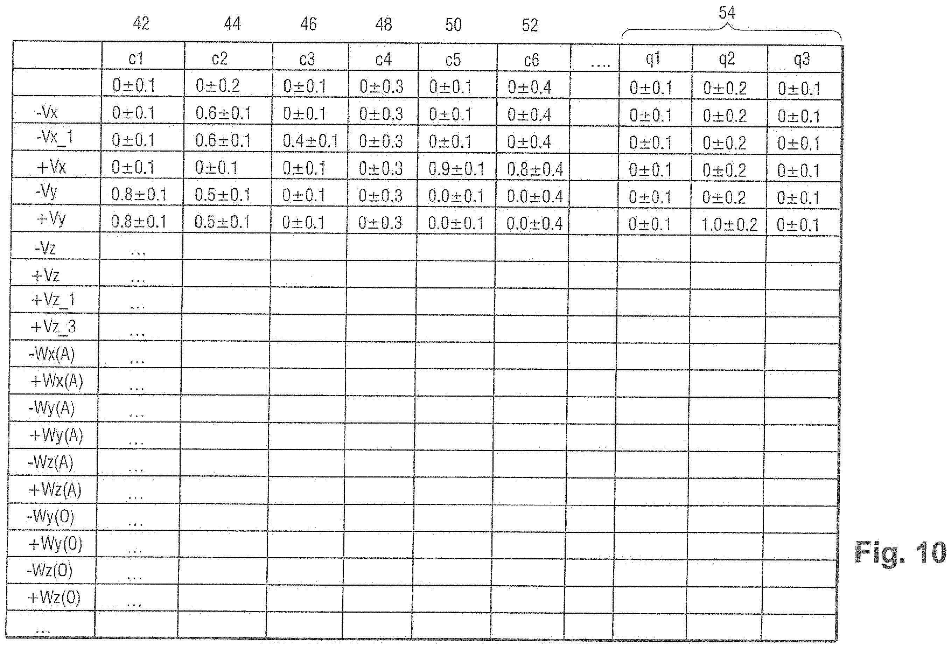

- la figure 10 est une représentation schématique d'une bibliothèque de signaux selon un quatrième mode de réalisation de l'invention.

### DESCRIPTION DETAILLEE DE L'INVENTION

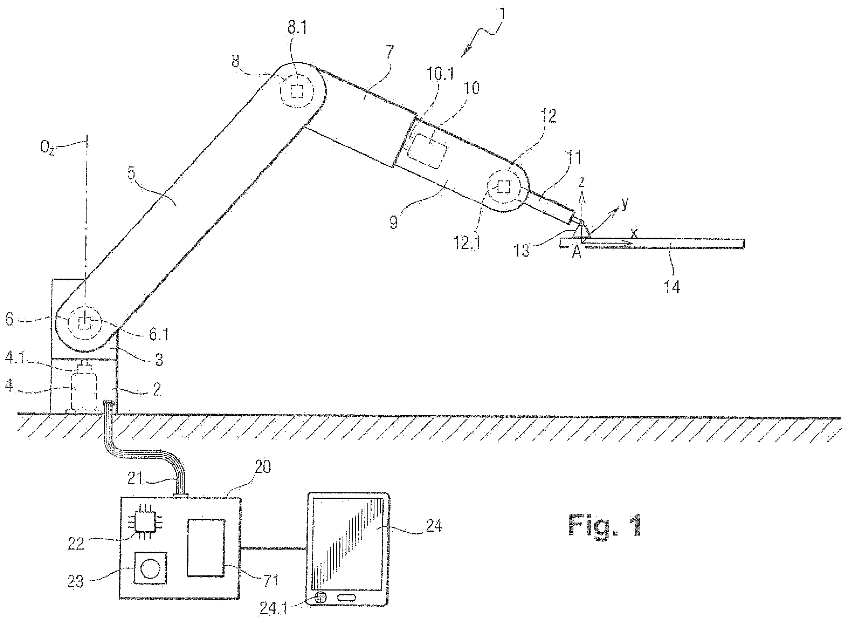

En référence à la figure 1, le dispositif de manipulation selon l'invention comprend un bras 1 de manipulation à six axes comprenant un châssis 2 reposant sur le sol et sur lequel une base 3 du bras 1 est montée à rotation autour d'un axe vertical Oz. La rotation de la base 3 est commandée par un premier motoréducteur 4 pourvu d'un premier codeur 4.1. Un premier segment 5 de bras 1 est articulé sur la base 3 selon un axe sensiblement horizontal à l'aide d'un deuxième motoréducteur 6 pourvu d'un deuxième codeur 6.1.

Un deuxième segment 7 de bras 1 est articulé sur l'extrémité 5.1 du premier segment de bras 5 selon un axe sensiblement horizontal à l'aide d'un troisième motoréducteur 8 pourvu d'un troisième codeur 8.1. Un troisième segment 9 de bras 1 est articulé sur l'extrémité du deuxième segment 7 de bras 1 autour de l'axe longitudinal du segment 7 à l'aide d'un quatrième motoréducteur 10 pourvu d'un quatrième codeur 10.1. Un quatrième segment 11 de bras 1 est articulé sur l'extrémité du troisième segment 9 selon un axe perpendiculaire à l'axe du troisième segment 9 à l'aide d'un cinquième motoréducteur 12 pourvu d'un cinquième codeur 12.1. L'extrémité du quatrième segment 11 est pourvue d'une interface de préhension -ici une ventouse 13- d'une pièce 14 à manipuler. Un repère orthonormé (A, X, Y, Z) est attaché au point de fixation A de la pièce 14 à la ventouse 13.

Les premier, deuxième, troisième, quatrième et cinquième motoréducteurs 4, 6, 8, 10 et 12 ainsi que les premier, deuxième, troisième, quatrième et cinquième codeurs 4.1, 6.1, 8.1, 10.1 et 12.1 sont reliés à une unité de commande 20 par une nappe de fils 21. L'unité de commande 20 comprend un processeur 22 et une mémoire 23 et peut être également reliée à une interface comme par exemple un écran tactile 24 pourvu d'un micro 24.1.

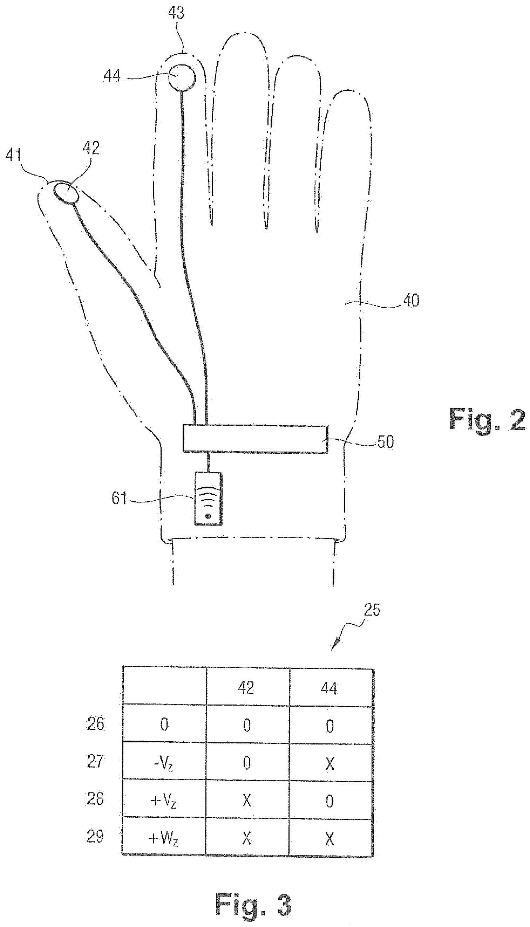

En référence à la figure 2, une interface 30 de commande du bras 1 comporte un gant 40 de manipulation comprenant un premier doigt - ici le pouce 41 - pourvu d'un premier capteur 42 de pression résistif. Le gant 40 comprend également un deuxième doigt - ici l'index 43 - pourvu d'un deuxième capteur 44 de pression résistif. Le premier capteur 42 et le deuxième capteur 44 sont tous deux reliés à une unité d'acquisition 60 elle-même reliée à un module Bluetooth 61 de communication avec l'unité de commande 20.

En référence à la figure 3, la mémoire 23 de l'unité de commande 20 comprend une bibliothèque 25 de signaux enregistrés (représentée schématiquement ici sous la forme d'un tableau à plusieurs entrées). La bibliothèque 25 comprend ici quatre combinaisons de signaux émis par le premier capteur 42 et le deuxième capteur 44 respectivement associées avec quatre vecteurs vitesse du bras 1 appliqués au point A :
- une première combinaison 26 dans laquelle aucun des premier et deuxième capteurs 42 et 44 n'émet de signal et qui est associée à un vecteur vitesse nul (pas de déplacement) ;
- une deuxième combinaison 27 dans laquelle seul le deuxième capteur 44 émet un signal et qui est associée à un vecteur vitesse négatif selon l'axe AZ ;
- une troisième combinaison 28 dans laquelle seul le premier capteur 42 émet un signal et qui est associée à un vecteur vitesse positif selon l'axe AZ ;
- une quatrième combinaison 29 dans laquelle les premier et deuxième capteurs 42 et 44 émettent tous deux un signal et qui est associée à un vecteur vitesse de rotation positive autour de l'axe AZ.

Au sens de la présente invention, le terme bibliothèque désigne tout type de base de données mettant en correspondance des combinaisons de signaux et des consignes (ici des vecteurs vitesse).

Les champs de la bibliothèque de signaux 25 peuvent être renseignés par saisie ou par apprentissage. La saisie peut se faire via l'écran tactile 24. L'apprentissage peut se faire en déclarant un mode apprentissage via l'écran tactile 24 et en réalisant une combinaison de signaux émis par les premier et deuxième capteurs 42 et 44 à l'aide du gant 40 (par exemple en serrant la pièce 14) puis en appliquant un vecteur vitesse à la pièce 14. Le vecteur vitesse appliqué par l'opérateur est mesuré par les premier, deuxième, troisième, quatrième et cinquième codeurs 4.1, 6.1, 8.1, 10.1 et 12.1 du bras 1 et transmis à l'unité de commande 20. Une fois l'étape d'enregistrement terminée, l'unité de commande 20 commande les premier, deuxième, troisième, quatrième et cinquième motoréducteurs 4, 6, 8, 10 et 12 de manière à ce qu'ils reproduisent le vecteur vitesse mesuré par les premier, deuxième, troisième, quatrième et cinquième codeurs 4.1, 6.1, 8.1, 10.1 et 12.1 du bras 1.

Si le vecteur vitesse exécuté par le bras 1 correspond à l'intention de l'opérateur, celui-ci valide l'étape d'apprentissage à l'aide d'une confirmation verbale (« OK ») capturée par le micro 24.1 de l'écran tactile 24 et reconnue par l'unité de commande 20. L'unité de commande 20 enregistre alors la combinaison de signaux émis par les premier et deuxième capteurs 42 et 44 dans un champ de la bibliothèque de signaux 25 et y associe le vecteur vitesse mesuré. Cette opération d'association de la combinaison de signaux et du vecteur vitesse est également désignée « classification » du signal. Lorsque le vecteur vitesse exécuté par le bras 1 ne correspond pas au vecteur vitesse que l'opérateur souhaite associer à la combinaison de signaux effectuée à l'aide du gant 40, l'opérateur annule l'étape d'apprentissage à l'aide d'une confirmation verbale (« PAS OK ») capturée par le micro 24.1 de l'écran tactile 24 et reconnue par l'unité de commande 20. L'unité de commande 20 se remet alors en mode apprentissage et se place dans l'étape d'enregistrement. Avantageusement la validation (instruction verbale« OK ») pourra être implicite, et seule l'annulation (instruction verbale « PAS OK ») devra être prononcée si l'opérateur souhaite annuler l'étape d'apprentissage.

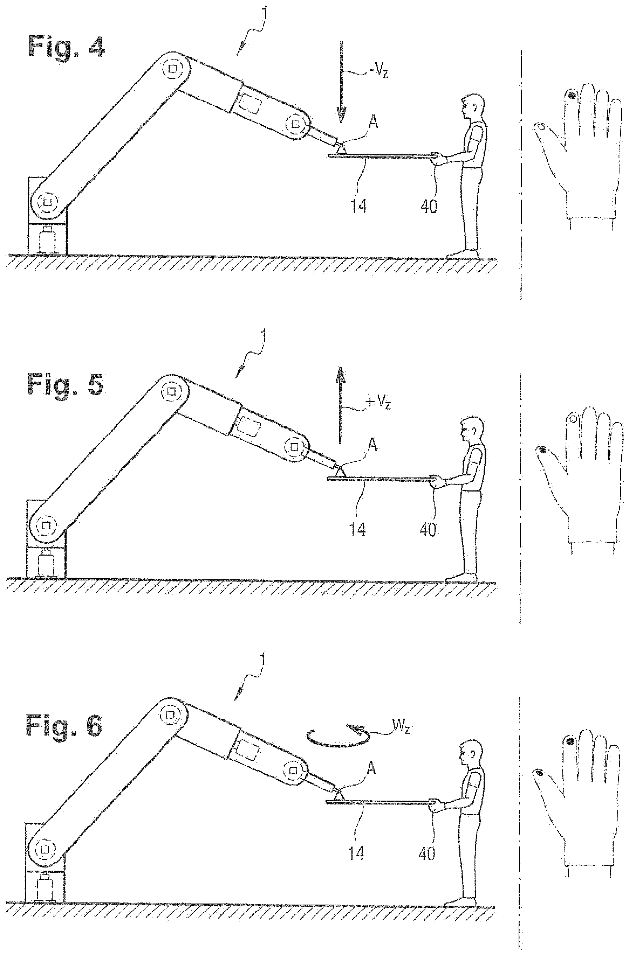

Sur les représentations schématiques des figures 4, 5, 6 et 9 du gant 40, un cercle sombre signifie que le capteur correspondant détecte un contact, un cercle vide indique que le capteur associé ne détecte aucun contact.

En fonctionnement, un opérateur revêt le gant 40 et vient appliquer l'index 43 du gant 40 sur la pièce 14. Le deuxième capteur 44 détecte une pression. La combinaison de signaux correspondant à l'excitation du seul deuxième capteur 44 est transmise à l'unité de commande 20 via le module Bluetooth 61. L'unité de commande 20 acquiert cette combinaison de signaux et compare la combinaison ainsi acquise aux première, deuxième, troisième et quatrième combinaisons 26 à 29 enregistrées dans la bibliothèque25. L'unité de commande 20 identifie la combinaison de signaux acquise comme correspondant à la deuxième combinaison enregistrée 27 et commande alors les premier, deuxième, troisième, quatrième et cinquième motoréducteurs 4, 6, 8, 10 et 12 de manière à ce que la pièce 14 effectue un déplacement selon un vecteur vitesse négatif selon l'axe AZ. Ce cas de figure est représenté en figure 4. Ce déplacement dure tant que la combinaison de signaux acquise correspond à la deuxième combinaison enregistrée 27. Il est à noter que le fait que l'opérateur applique son index 43 sur le dessus ou le dessous de la pièce 14 (ou sur un des côtés de celle-ci) et donc l'orientation de l'effort résultant en la pression mesurée par le capteur 44 est indifférente de l'orientation du vecteur vitesse du déplacement commandé par l'unité de commande 20.

Ainsi, bien que le fonctionnement du gant soit particulièrement intuitif (un effort dirigé vers le bas appliqué par l'index 43 sur le dessus de la pièce 14 amène à un déplacement de la pièce vers le bas), le procédé de commande selon l'invention ne requiert pas de déterminer l'orientation de l'effort ni la distance séparant l'opérateur du point de liaison de la pièce à manipuler 14 au bras 1 pour identifier l'intention de l'opérateur.

Lorsque l'opérateur applique le pouce 41 du gant 40 sur la pièce 14, le premier capteur 42 détecte une pression de contact. La combinaison de signaux correspondant à l'excitation du seul premier capteur 42 est transmise à l'unité de commande 20 via le module Bluetooth 61. L'unité de commande 20 acquiert cette combinaison de signaux et compare la combinaison ainsi acquise aux première, deuxième, troisième, quatrième combinaisons 26 à 29 enregistrées dans la bibliothèque de signaux 25. L'unité de commande 20 identifie la combinaison de signaux acquise comme correspondant à la troisième combinaison 28 et commande alors les premier, deuxième, troisième, quatrième et cinquième motoréducteurs 4, 6, 8, 10 et 12 de manière à ce que la pièce 14 effectue un déplacement selon un vecteur vitesse positif selon l'axe AZ. Ce cas de figure est représenté en figure 5.

Lorsque l'opérateur serre la pièce 14 entre l'index 43 et le pouce 41 du gant 40, les premier et deuxième capteurs 42 et 44 détectent une pression de contact. La combinaison de signaux correspondant à l'excitation des premier et deuxième capteurs 42 et 44 est transmise à l'unité de commande 20 via le module Bluetooth 61. L'unité de commande 20 acquiert cette combinaison de signaux et compare la combinaison ainsi acquise aux première, deuxième, troisième, quatrième combinaisons 26 à 29 enregistrées dans la bibliothèque de signaux 25. L'unité de commande 20 identifie la combinaison de signaux acquise comme correspondant à la quatrième combinaison 29 et commande alors les premier, deuxième, troisième, quatrième et cinquième motoréducteurs 4, 6, 8, 10 et 12 de manière à ce que la pièce 14 effectue une rotation dans le sens positif autour de l'axe AZ. Ce cas de figure est représenté en figure 6.

On obtient ainsi un procédé de commande particulièrement intuitif qui ne requiert pas de connaître la distance séparant le point d'application des efforts sur la pièce 14 à manipuler. Le procédé de commande de l'invention permet de nettement discriminer l'intention de l'opérateur de réaliser une rotation ou une translation de la pièce 14 à manipuler, et de différencier le centre de rotation autour duquel la rotation de la pièce à manipuler 14 est souhaitée (interface de préhension, base du bras 1 ou autre) lorsque des combinaisons de signaux ont été associées à des rotations autour de différents centres de rotation de la pièce à manipuler.

Les éléments identiques ou analogues à ceux précédemment décrits porteront une référence numérique identique à ceux-ci dans la description qui suit des deuxième et troisième modes de réalisation de l'invention.

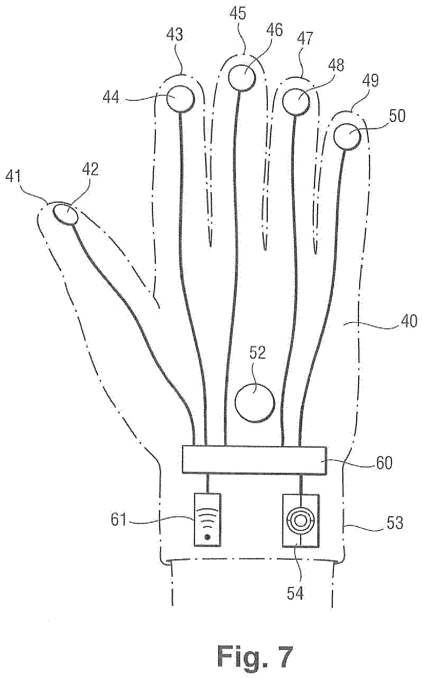

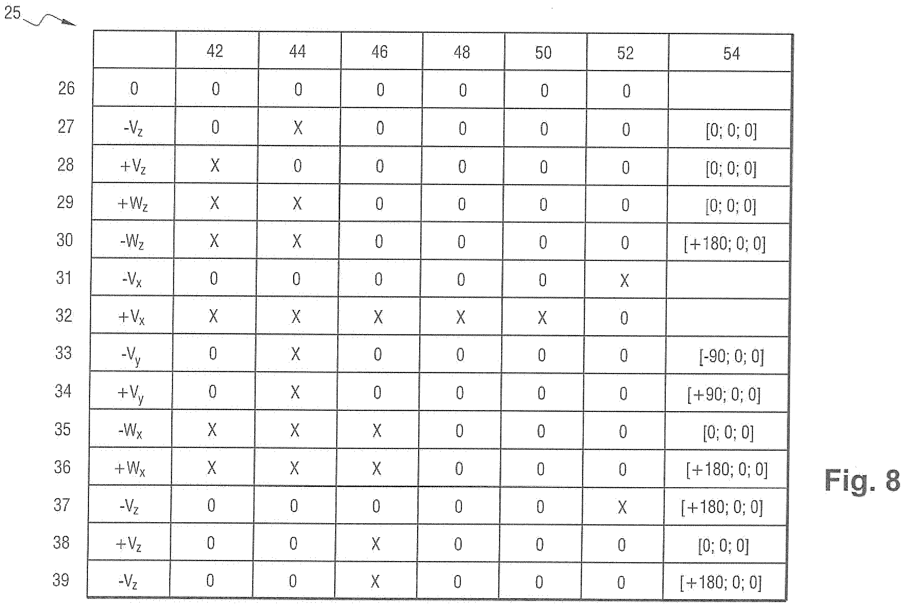

Selon un deuxième mode de réalisation de l'invention représenté sur les figures 7 et 8, le gant 40 comprend un troisième, un quatrième et un cinquième doigt 45, 47, 49 respectivement pourvus d'un troisième capteur 46 de contact, d'un quatrième capteur 48 de contact et d'un cinquième capteur 50 de contact tous reliés à l'unité d'acquisition 60. Le gant 40 comprend également un sixième capteur 52 de contact situé sur le haut de la paume 51 du gant 40. Le poignet 53 du gant 40 comprend également une centrale inertielle 54 à gyroscopes et accéléromètres. Le sixième capteur 52 et la centrale inertielle 54 sont également reliés à l'unité d'acquisition 60. La centrale inertielle 54 délivre des triplets de signaux dont le premier terme 54.1 correspond à un angle de rotation effectué autour de l'axe OX ; le deuxième terme 54.2 correspond à un angle de rotation effectué autour de l'axe OY, le troisième terme 54.3 correspond à un angle de rotation effectué autour de l'axe OZ.

Dans ce deuxième mode de réalisation de l'invention, la bibliothèque de signaux 25 comprend des combinaisons enregistrées de signaux comportant au moins un signal d'au moins un des troisième, quatrième, cinquième et sixième capteurs de contact 46, 48, 50 et 52, dont seule une partie est représentée en figure 8. Les signaux en provenance de la centrale inertielle 54 sont seuillés pour prendre les valeurs discrètes suivantes, dans le cas d'un gant 40 porté par la main gauche d'un opérateur :
- [0, 0,0] degrés (paume de main vers le haut) ;
- [+90, 0,0] degrés (pouce de main gauche vers le haut) ;
- [+180, 0,0] degrés (paume de main vers le bas) ;
- [-90, 0,0] degrés (pouce de main gauche vers le bas) .

Les combinaisons de signaux enregistrées 26 à 36 peuvent intégrer également un signal en provenance de la centrale inertielle 54. La figure 8 représente une partie des combinaisons de signaux enregistrées 26 à 36 possibles. Un « O » dans une colonne correspondant à l'un des capteurs de contact 42 à 50 signifie que le capteur correspondant n'émet aucun signal, un « X » dans une colonne correspondant à l'un des capteurs de contact 42 à 50 indique que le capteur correspondant émet un signal. Un « 0 » dans la colonne correspondant à la centrale inertielle 54 indique que la centrale inertielle 54 mesure que la main gauche est positionnée paume vers le haut. Un « +90 » dans la colonne correspondant à la centrale inertielle 54 indique que la centrale inertielle 54 mesure que la main gauche est positionnée pouce vers le haut. Un « -90 » dans la colonne correspondant à la centrale inertielle 54 indique que la centrale inertielle 54 mesure que la main gauche est positionnée pouce vers le bas. Un « [+180, 0,0] » dans la colonne correspondant à la centrale inertielle 54 indique que la centrale inertielle 54 mesure que la main gauche est positionnée paume vers le bas. Comme visible en figure 8, la bibliothèque de signaux 25 comprend également une combinaison 37 dans laquelle le sixième capteur de contact 52 émet un signal et la centrale inertielle 54 indique que la paume de la main est orientée vers le bas. La combinaison 37 est associée à un vecteur vitesse -Vz correspondant à un déplacement de la pièce 14 vers le bas. Une autre combinaison 39, dans laquelle le troisième capteur de contact 46 émet un signal et la centrale inertielle 54 indique que la paume de la main est orientée vers le bas, est également associée au vecteur vitesse -Vz. La bibliothèque de signaux 25 comprend également une combinaison 38 dans laquelle le sixième capteur de contact 52 émet un signal et la centrale inertielle 54 indique que la paume de la main est orientée vers le haut. Ainsi, la bibliothèque de signaux 25 comprend trois combinaisons de signaux 27, 37 et 39 associées à un même vecteur vitesse -Vz. Cette pluralité de combinaisons associée à un même vecteur vitesse permet d'améliorer le caractère intuitif du procédé de commande en permettant qu'une pression vers le bas exercée sur la pièce 14 à l'aide de l'index (combinaison 27), de la paume de la main (combinaison 37) ou du majeur (combinaison 39) commande le bras 1 de manière à ce que la pièce 14 se déplace selon le vecteur vitesse -Vz.

En fonctionnement, l'unité de commande 20 acquiert une combinaison de signaux en provenance des premier, deuxième, troisième, quatrième, cinquième et sixième capteurs de contact 42, 44, 46, 48, 50, et 52 ainsi qu'en provenance de la centrale inertielle 54. A des fins d'illustration, l'unité de commande 20 acquiert une combinaison de signaux 70 dans laquelle les premier et deuxième capteurs 42 et 44 émettent un signal et aucun des autres capteurs n'émet de signal, la centrale inertielle indiquant « [0, 0,0] » (paume de main vers le haut). L'unité de commande 20 compare alors la combinaison de signaux 70 acquise avec les combinaisons 26 à 39 enregistrées dans la bibliothèque 25 et identifie que la combinaison de signaux acquise 70 correspond à la combinaison de signaux enregistrée 29. L'unité de commande 20 commande alors les premier, deuxième, troisième, quatrième et cinquième motoréducteurs 4, 6, 8, 10 et 12 de manière à ce que la pièce 14 effectue une rotation autour de l'axe AZ dans le sens positif, qui correspond au vecteur vitesse associé à la combinaison de signaux enregistrée 29.

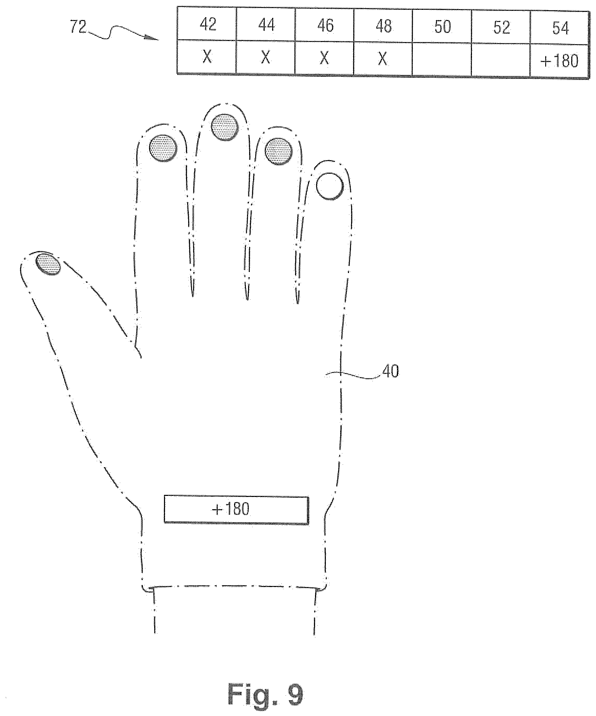

Selon un troisième mode de réalisation particulier représenté en figure 9, l'unité de commande 20 comprend un module d'intelligence artificielle 71 agencé pour établir des scores de concordance entre une combinaison de signaux acquise et les combinaisons de signaux enregistrées 26 à 39 dans la bibliothèque 25. Lorsqu'une combinaison 72 de signaux acquise -ici par exemple, une combinaison 72 de signaux acquise dans laquelle les premier, deuxième, troisième et quatrième capteurs 42, 44, 46 et 48 émettent des signaux et que la centrale inertielle 54 indique « [+180, 0,0]», c'est-à-dire que la paume de main est vers le bas, l'unité de commande 20 compare la combinaison de signaux 72 acquise aux combinaisons de signaux enregistrées 26 à 39 de la bibliothèque 25. L'unité de commande 20 ne trouvant pas de correspondance entre la combinaison de signaux acquise 72 et les combinaisons de signaux enregistrées 26 à 39 de la bibliothèque 25, l'unité de commande 20 réalise alors une étape supplémentaire d'établir des scores de concordance entre la combinaison de signaux 72 acquise et les combinaisons de signaux 26 à 39 enregistrées dans la bibliothèque 25. L'unité de commande sélectionne alors la combinaison enregistrée 26 à 39 dont le score de correspondance (distance, probabilité, etc...) avec la combinaison de signaux 72 acquise est supérieur à un premier seuil préréglé - ici la combinaison enregistrée 36 - et propose alors via l'écran tactile 24 à l'opérateur d'effectuer le vecteur vitesse associé à la combinaison de signaux enregistrée 36. Si le vecteur vitesse proposé -ici une rotation autour de l'axe AX dans le sens positif- correspond à l'intention de l'opérateur, celui-ci valide la proposition à l'aide d'une instruction vocale « OK » capturée par le micro 24.1 de l'écran tactile 24 et reconnue par l'unité de commande 20. L'unité de commande 20 commande alors les premier, deuxième, troisième, quatrième et cinquième motoréducteurs 4, 6, 8, 10 et 12 de manière à ce que la pièce 14 effectue une rotation autour de l'axe AX dans le sens positif.

Si le vecteur vitesse proposé -ici une rotation autour de l'axe AX dans le sens positif- ne correspond pas à l'intention de l'opérateur, celui-ci invalide la proposition à l'aide d'une instruction vocale « PAS OK » capturée par le micro 24.1 de l'écran tactile 24 et reconnue par l'unité de commande 20. Selon une première variante du troisième mode de réalisation, l'unité de commande 20 exclut la combinaison de signaux 36 et lance une nouvelle opération de sélection d'une combinaison enregistrée 26 à 35 et 37 à 39 dont le score de correspondance (distance, probabilité, etc...) avec la combinaison de signaux 72 est supérieur à un deuxième seuil préréglé plus faible que le premier seuil préréglé. Cette nouvelle combinaison est proposée à l'opérateur qui peut la refuser ou l'accepter selon les modalités décrites ci-dessus.

Selon une deuxième variante du troisième mode de réalisation, l'unité de commande 20 propose d'enregistrer la combinaison 72 dans la bibliothèque 25 et de l'associer également au vecteur vitesse 36. L'opérateur peut refuser ou accepter l'enregistrement selon les modalités décrites ci-dessus.

Le procédé de commande peut encore être amélioré si pendant l'étape d'apprentissage a), ou pendant l'étape de reconnaissance c), il est possible de supprimer un couple combinaison de signaux/vecteur vitesse. Le procédé de commande peut être également amélioré en ajoutant des lois adaptatives sur les critères probabilistes ou de seuils, permettant ainsi un apprentissage semi-supervisé qui permet de rendre plus robuste l'étape de détection.

Selon un quatrième mode de réalisation, les mesures effectuées par le premier capteur de pression 42, le deuxième capteur de pression 46, le troisième capteur de pression 48, le quatrième capteur de pression 50, et le cinquième capteur de pression 52 sont traitées en tant que mesures analogiques (et non en tout ou rien comme dans les modes de réalisation précédents). Ainsi, lors de l'étape préparatoire a) et de l'étape de comparaison c), l'unité de commande 20 reçoit des nombre réels (valeurs analogiques) quantifiés, ici avec une résolution de 12 bits. L'unité de commande 20 met alors en oeuvre des algorithmes adaptés -parmi lesquels Réseaux de neurones, Modèles de Markov Caché, les Séparateurs à Vaste Marge, k-means, GMM,...), et/ou inclut notamment une étape de filtrage des différents signaux, des pondérations, ainsi que des critères d'identification probabilistes ou basés sur de simples seuils. Ces outils permettent de discriminer une intention effective de contact d'un bruit ou d'une dérive du capteur. Selon ce quatrième mode de réalisation, les champs de la bibliothèque de signaux 25 comprend alors des valeurs auxquelles sont accolées des plages de tolérances.

Selon un cinquième mode de réalisation, le niveau de pression peut être utilisé pour faire varier l'intensité du vecteur vitesse à appliquer à la pièce à manipuler 14. Il est également possible de faire varier l'intensité du vecteur vitesse ou l'accélération à appliquer à la pièce à manipuler selon la durée d'application de la combinaison de signaux.

Bien entendu, l'invention n'est pas limitée aux modes de réalisation décrits mais englobe toute variante entrant dans le champ de l'invention telle que définie par les revendications.

En particulier,
- bien qu'ici le procédé soit décrit en application à la commande d'un bras de manipulation à six axes, l'invention s'applique également à d'autres types de robot de manipulation, comme par exemple un pont roulant, une grue sur tourelle, un bras comprenant un nombre différent d'articulations et/ou de segments ;
- bien qu'ici le robot de manipulation comprenne une ventouse de préhension de la pièce à manipuler, l'invention s'applique également à d'autres moyens de liaison du robot de manipulation à une pièce à manipuler comme par exemple un crochet, une pince, un aimant ou une liaison vissée ;
- bien qu'ici l'unité de commande est reliée au robot de manipulation par une nappe de fils, l'invention s'applique également à d'autres moyens de liaison fonctionnelle de l'unité de commande au robot de manipulation comme par exemple une liaison à l'aide d'un bus Ethercat, CAN, profibus, Ethernet, une fibre optique, une liaison Wi-Fi ou Bluetooth ;

- bien qu'ici le gant de manipulation comprenne cinq doigts, l'invention s'applique également à d'autres types d'interface de commande comme par exemple une interface de commande comprenant un gant à deux, trois ou quatre doigts. Au sens de la présente demande, un gant est un support destiné à être porté par une main d'un opérateur. Ainsi, un ou plusieurs doigtiers portant les capteurs entre dans les objets désignés par le terme « gant » au sens de la demande ;
- bien qu'ici l'unité de commande soit reliée aux capteurs du gant de manipulation à l'aide d'un module Bluetooth, l'invention s'applique également à d'autres moyens de liaison fonctionnelle de l'interface de commande à l'unité de commande comme par exemple une liaison filaire, par fibre optique, ou sans fil selon des protocoles tels que Wi-Fi ou radio ;
- bien qu'ici l'unité de commande comprenne un processeur, l'invention s'applique également à d'autres moyens de calcul comme par exemple un microcontrôleur, des portes logiques, ou un FPGA ;
- bien qu'ici l'unité de commande soit reliée à un écran tactile, l'invention s'applique également à d'autres types d'interface comme par exemple un clavier et/ou un joystick associé à un écran ou une commande vocale, voire par Eye Tracker (clignement) ou pression sur un doigt, ou tout autre outil évitant ainsi à l'opérateur de quitter son poste de travail ;
- bien qu' ici le gant comprenne des capteurs de pression résistifs, l'invention s'applique également à d'autres types de capteurs de contact, comme par exemple des capteurs capacitifs, inductifs, photoélectriques, ultrasoniques ou des interrupteurs.
- bien qu'ici la bibliothèque comprenne entre quatre et treize combinaisons de signaux, l'invention s'applique également à une bibliothèque de signaux comprenant moins de quatre combinaisons de signaux, par exemple deux, ou plus de treize ;
- bien qu'ici l'opérateur manipule directement la pièce à manipuler par le robot, l'invention s'applique également à une manipulation indirecte dans laquelle l'opérateur manipule un avatar de la pièce à manipuler ;
- bien qu'ici une centrale inertielle soit située sur le gant du poignet, l'invention s'applique également à d'autres types de moyens de mesure d'une orientation du gant comme par exemple une centrale inertielle à gyromètres à résonance ou à bulles, ou un système optique tel que des caméras ou des capteurs infrarouge ;
- bien qu'ici une centrale inertielle soit située sur le gant du poignet, l'invention s'applique également à d'autres implantations des moyens de mesure d'une orientation du gant comme par exemple sur le dessus de la main, sur un des doigts, voire sur l'avant-bras de l'opérateur.
- bien qu'ici le gant comporte entre deux et six capteur de pression, l'invention s'applique également à un gant comportant beaucoup plus de capteurs de pressions, ou d'autres types de capteurs comme par exemple des capteurs de flexion de doigts ou des capteurs de localisation infrarouges ;
- bien qu'ici un seul gant soit utilisé, l'invention s'applique également à une interface de commande comprenant plusieurs gants, par exemple un opérateur portant deux gants, ou même plusieurs opérateurs portant un ou plusieurs gants et manipulant le même objet ;
- bien qu'ici le centre autour duquel la pièce à manipuler effectue une rotation se situe au niveau de l'interface de préhension du robot de manipulation, l'invention s'applique également à d'autres centres de rotation, situés à d'autres emplacements sur l'objet ou même en-dehors de l'objet à manipuler ;
- bien qu'ici le fonctionnement ait été décrit avec une représentation de la rotation du gant et/ou de la pièce à manipuler sous la forme d'angles d'Euler autour d'axes d'un repère orthonormé lié au robot de manipulation , l'invention s'applique également à d'autres représentations des rotations, comme par exemple des quaternions, la représentation de Rodrigues, tout ou partie de la matrice de rotation, ou d'autres angles d'Euler (ex. roulis/tangage/lacet, ...). Les rotations seront avantageusement représentées dans un repère lié à la pièce à manipuler ou à l'organe terminal du robot;
- bien qu'ici les mouvements associés aux combinaisons de signaux soient des vecteurs vitesse cartésiens, l'invention s'applique également à d'autres types de mouvements associés , comme par exemple des vitesses articulaires, ou des efforts cartésiens ou articulaires, ou des positions cartésiennes ou articulaires, ou des trajectoires cartésiennes ou articulaires.
- bien qu'ici les vecteurs vitesses appliqués à la pièce à manipuler soient décrits de manière cartésienne dans un repère orthonormé lié au robot de manipulation (VZ, VY, etc...), l'invention s'applique de façon avantageuse à d'autres types de représentations des vecteurs vitesses à appliquer à la pièce à manipuler comme par exemple des vecteurs vitesses à appliquer dans le repère de l'objet ou de l'interface de préhension ou dans un autre repère de référence ;
- bien qu'ici le gant comprenne un sixième capteur de contact situé sur le haut de la paume, l'invention s'applique également d'autres implantations du sixième capteur sur la paume du gant comme par exemple une implantation sur l'éminence thénar de la paume, ou une pluralité de capteurs sur la paume ;
- bien qu'ici la validation ou l'annulation de l'étape d'apprentissage s'effectue à l'aide d'une confirmation verbale capturée par un micro, l'invention s'applique également à d'autres moyens de valider ou annuler l'étape d'apprentissage comme par exemple une pression sur un bouton, une combinaison de signaux en provenance du gant. Avantageusement, la validation ou l'annulation se fait à l'aide d'une action de l'opérateur ne nécessitant pas qu'il lâche la pièce à manipuler ou son poste de travail comme par exemple la détection d'un mouvement de tête ou un clignement des yeux détecté à l'aide d'une caméra reliée à l'unité de commande ;
- bien qu'ici les combinaisons de signaux soient associées à des vecteurs vitesse, l'invention s'applique également à d'autres types de consignes au robot comme par exemple une consigne de déplacement, de trajectoire, d'effort ou d'accélération ;
- bien qu'ici le robot soit un robot de manipulation, l'invention s'applique également à d'autres types de robot comme par exemple un exosquelette ambulatoire ou non dans lequel la bibliothèque de signaux associe des combinaisons à des consignes à destination des différents actionneurs de l'exosquelette comme par exemple les actionneurs de bras et/ou de jambe.

## Revendications

1. Procédé de commande d'un robot (1), le robot (1) étant relié à une interface de commande comportant un gant (40) comprenant un premier doigt (41) pourvu d'un premier capteur de contact (42) et un deuxième doigt (43) pourvu d'un deuxième capteur de contact (44), le procédé comprenant les étapes suivantes :
a) au cours d'une étape préparatoire, associer, dans une bibliothèque de signaux (25), une première combinaison de signaux (26) émis par les premier et deuxième capteurs (42, 44) du gant (40) avec une première consigne , du robot (1) et associer, dans la bibliothèque de signaux (25), une deuxième combinaison de signaux (27) émis par les premier et deuxième capteurs (42, 44) du gant (40) avec une deuxième consigne , du robot (1);
b) acquérir une combinaison de signaux acquise (70) en provenance des capteurs (42, 44) du gant (40);
c) comparer la combinaison de signaux acquise (70) avec la première combinaison de signaux (26) et la deuxième combinaison (27) de la bibliothèque (25);
d) commander le robot (1) de manière à ce qu'il atteigne la consigne associée à la combinaison de signaux acquise (70),
dans lequel
l'étape c) de comparer la combinaison de signaux acquise (70) avec la première combinaison (26) et la deuxième combinaison (27) de la bibliothèque de signaux (25) comprenant une étape supplémentaire c') de proposer la combinaison parmi la première combinaison (26) et la deuxième combinaison (27) dont un score de concordance avec la combinaison de signaux acquise (70) est supérieur à un seuil prédéterminé lorsque la combinaison de signaux acquise (70) ne correspond pas à la première combinaison (26) ou la deuxième combinaison(27) de la bibliothèque de signaux (25),
et dans lequel la première consigne et/ou la deuxième consigne est un vecteur vitesse, un déplacement ou un effort.

2. Procédé de commande selon la revendication 1, dans lequel le gant (40) comprend un troisième (45) et/ou un quatrième (47) et/ou un cinquième doigt (49) respectivement pourvu d'un troisième (46) et/ou un quatrième (48) et/ou un cinquième capteur de contact (50), la bibliothèque de signaux (25) comprenant des combinaisons enregistrées de signaux (26-39) comportant au moins un signal d'au moins un du troisième (46) et/ou du quatrième (48) et/ou du cinquième capteur (50).

3. Procédé de commande selon la revendication 2, dans lequel le gant (40) comprend également un capteur de contact (52) situé sur la paume du gant (40).

4. Procédé de commande selon l'une des revendications précédentes, dans lequel le gant (40) comprend également des moyens de mesure (54) d'une orientation du gant (40).

5. Procédé de commande selon la revendication 4, dans lequel les moyens de mesure d'une orientation (54) du gant (40) comprennent une centrale inertielle (54).

6. Procédé de commande selon l'une des revendications précédentes, dans lequel au moins l'un des capteurs de contact (42, 44) comprend un capteur de pression.

7. Procédé de commande selon l'une des revendications précédentes, dans lequel la bibliothèque de signaux (25) comprend une pluralité de combinaisons de signaux (27, 37, 28, 38) associés à la même consigne.

8. Procédé de commande selon l'une quelconque des revendications précédentes, dans lequel l'étape préparatoire comprend une étape d'acquérir une première ou une deuxième combinaison de signaux (26, 27) en provenance des capteurs (42, 44) du gant (40) et une étape d'acquérir une première ou un deuxième consigne (27, 28) appliquée sur le robot de manipulation (1).

9. Procédé de commande selon la revendication 8, dans lequel l'étape préparatoire comprend une étape de commander le robot de manipulation (1) pour qu'il reproduise la première ou deuxième consigne (27, 28) suivie d'une étape de validation de l'association de la combinaison de signaux (26, 27) en provenance des capteurs (42, 44) du gant (40) avec la consigne (27, 28) appliquée sur le robot de manipulation (1).

10. Gant de manipulation (40) comprenant un premier doigt (41) pourvu d'un premier capteur de contact (42) et un deuxième doigt (43) pourvu d'un deuxième capteur de contact (44) ainsi que des moyens de liaison fonctionnelle (61) avec une unité de commande (20) agencée pour mettre en oeuvre le procédé selon l'une quelconque des revendications précédentes.

11. Gant de manipulation (40) selon la revendication 10, comprenant un troisième (45) et/ou un quatrième (47) et/ou un cinquième doigt (49) respectivement pourvu d'un troisième (46) et/ou un quatrième (48) et/ou un cinquième (50) capteur de contact et/ou un capteur de contact (52) situé sur la paume du gant (40) et/ou une centrale inertielle (54) .

12. Gant de manipulation (40) selon les revendications 10 ou 11, dans lequel les moyens de liaison fonctionnelle (61) avec une unité de commande (20) comprennent des moyens de communication sans fil (61).

13. Dispositif comprenant un robot (1), une interface de commande comportant un gant de manipulation (40) selon l'une des revendications 10 à 12 et une unité de commande (20) fonctionnellement reliée à l'interface de manipulation et au robot de manipulation (1), l'unité de commande (20) étant agencée pour mettre en oeuvre le procédé de commande selon l'une des revendications 1 à 9.

14. Dispositif selon la revendication 13, dans lequel le robot est un robot de manipulation (1).

15. Dispositif selon la revendication 13, dans lequel le robot est un exosquelette.

## Patentansprüche

1. Verfahren zum Steuern eines Roboters (1), wobei der Roboter (1) mit einer Steuerschnittstelle verbunden ist, die einen Handschuh (40) umfasst, der einen ersten Finger (41) enthält, der mit einem ersten Kontaktsensor (42) versehen ist, sowie einen zweiten Finger (43), der mit einem zweiten Kontaktsensor (44) versehen ist, wobei das Verfahren die folgenden Schritte umfasst:
a) während eines Vorbereitungsschritts, Verknüpfen einer ersten Kombination (26) von Signalen, die von dem ersten und dem zweiten Sensor (42, 44) des Handschuhs (40) emittiert werden, mit einem ersten Sollwert des Roboters (1) in einer Signalbibliothek (25) und Verknüpfen einer zweiten Kombination (27) von Signalen, die von dem ersten und dem zweiten Sensor (42, 44) des Handschuhs (40) emittiert werden, mit einem zweiten Sollwert des Roboters (1) in der Signalbibliothek (25);
b) Erfassen einer Kombination (70) von Signalen, die aus den Sensoren (42, 44) des Handschuhs (40) erfasst wird;
c) Vergleichen der erfassten Kombination (70) von Signalen mit der ersten Kombination (26) von Signalen und der zweiten Kombination (27) der Bibliothek (25);
d) Steuern des Roboters (1) derart, dass er den Sollwert erreicht, der mit der erfassten Kombination (70) von Signalen verknüpft ist,
wobei
der Schritt c) des Vergleichens der erfassten Kombination (70) von Signalen mit der ersten Kombination (26) und der zweiten Kombination (27) der Bibliothek (25) von Signalen einen zusätzlichen Schritt c') des Vorschlagens derjenigen Kombination aus der ersten Kombination (26) und der zweiten Kombination (27) umfasst, von der ein Score einer Übereinstimmung mit der erfassten Signalkombination (70) größer als ein vorbestimmter Schwellenwert ist, wenn die erfasste Signalkombination (70) nicht der ersten Kombination (26) oder der zweiten Kombination (27) der Signalbibliothek (25) entspricht,
und wobei der erste Sollwert und/oder der zweite Sollwert ein Geschwindigkeitsvektor, eine Verschiebung oder eine Kraft ist.

2. Verfahren zum Steuern nach Anspruch 1, bei dem der Handschuh (40) einen dritten Finger (45) und/oder einen vierten Finger (47) und/oder einen fünften Finger (49) umfasst, die entsprechend mit einem dritten (46) und/oder einem vierten (48) und/oder einem fünften Kontaktsensor (50) versehen sind, wobei die Signalbibliothek (25) gespeicherte Kombinationen (26 - 39) von Signalen umfasst, die mindestens ein Signal mindestens eines Sensors aus dem dritten Sensor (46) und/oder dem vierten Sensor (48) und/oder dem fünften Sensor (50) umfasst.

3. Verfahren zum Steuern nach Anspruch 2, bei dem der Handschuh (40) ferner einen Kontaktsensor (52) umfasst, der sich auf der Handfläche des Handschuhs (40) befindet.

4. Verfahren zum Steuern nach einem der vorhergehenden Ansprüche, bei dem der Handschuh (40) ferner Mittel (54) zum Messen einer Ausrichtung des Handschuhs (40) umfasst.

5. Verfahren zum Steuern nach Anspruch 4, bei dem die Mittel (54) zum Messen einer Ausrichtung des Handschuhs (40) eine inertiale Messeinheit (54) umfassen.

6. Verfahren zum Steuern nach einem der vorhergehenden Ansprüche, bei dem mindestens einer der Kontaktsensoren (42, 44) einen Drucksensor umfasst.

7. Verfahren zum Steuern nach einem der vorhergehenden Ansprüche, bei dem die Signalbibliothek (25) eine Vielzahl von Kombinationen (27, 37, 28, 38) von Signalen umfasst, die mit demselben Sollwert verknüpft sind.

8. Verfahren zum Steuern nach einem der vorhergehenden Ansprüche, bei dem der Vorbereitungsschritt einen Schritt des Erfassens einer ersten oder einer zweiten Kombination (26, 27) von Signalen aus den Sensoren (42, 44) des Handschuhs (40) und einen Schritt des Erfassens eines ersten oder eines zweiten Sollwerts (27, 28), der auf den Handhabungsroboter (1) angewandt wird, umfasst.

9. Verfahren zum Steuern nach Anspruch 8, bei dem der Vorbereitungsschritt einen Schritt des Steuerns des Handhabungsroboters (1) umfasst, damit er den ersten oder zweiten Sollwert (27, 28) reproduziert, gefolgt von einem Schritt der Validierung der Verknüpfung der Kombination (26, 27) von Signalen aus den Sensoren (42, 44) des Handschuhs (40) mit dem Sollwert (27, 28), der auf den Handhabungsroboter (1) angewandt wird.

10. Handhabungshandschuh (40), umfassend einen ersten Finger (41), der mit einem ersten Kontaktsensor (42) versehen ist, und einen zweiten Finger (43), der mit einem zweiten Kontaktsensor (44) versehen ist, sowie Mittel (61) zur funktionalen Verbindung mit einer Steuereinheit (20), die ausgebildet ist, das Verfahren nach einem der vorhergehenden Ansprüche durchzuführen.

11. Handhabungshandschuh (40) nach Anspruch 10, umfassend einen dritten Finger (45) und/oder einen vierten Finger (47) und/oder einen fünften Finger (49), die entsprechend mit einem dritten Kontaktsensor (46) und/oder einem vierten Kontaktsensor (48) und/oder einem fünften Kontaktsensor (50) versehen sind, und/oder einen Kontaktsensor (52), der sich auf der Handfläche (40) befindet, und/oder eine inertiale Messeinheit (54).

12. Handhabungshandschuh (40) nach den Ansprüchen 10 oder 11, bei dem die Mittel (61) zur funktionalen Verbindung mit einer Steuereinheit (20) drahtlose Kommunikationsmittel (61) umfassen.

13. Vorrichtung, umfassend einen Roboter (1), eine Steuerschnittstelle, die einen Handhabungshandschuh (40) nach einem der Ansprüche 10 bis 12 umfasst, und eine Steuereinheit (20), die funktional mit der Handhabungsschnittstelle und mit dem Handhabungsroboter (1) verbunden ist, wobei die Steuereinheit (20) ausgebildet ist, das Verfahren zum Steuern nach einem der Ansprüche 1 bis 9 durchzuführen.

14. Vorrichtung nach Anspruch 13, bei der der Roboter ein Handhabungsroboter (1) ist.

15. Vorrichtung nach Anspruch 13, bei der der Roboter ein Exoskelett ist.

## Claims

1. A method for controlling a robot (1), the robot (1) being connected to a control interface having a glove (40) comprising a first finger (41) provided with a first contact sensor (42) and a second finger (43) provided with a second contact sensor (44), the method comprising the following steps:
a) during a preparatory step, associating, in a signal library (25), a first combination of signals (26) emitted by the first and second sensors (42, 44) of the glove (40) with a first setpoint, and associating, in the signal library (25), a second combination of signals (27) emitted by the first and second sensors (42, 44) of the glove (40) with a second setpoint, of the robot (1),;
b) acquiring an acquired combination of signals (70) coming from the sensors (42, 44) of the glove (40);
c) comparing the acquired combination of signals with the first combination of signals (26) and the second combination of signals (27) in the library (25);
d) controlling the robot (1) so that it reaches the setpoint associated with the acquired combination of signals,
step c) of comparing the acquired combination of signals (72) with the first combination (26) and the second combination (26) of the signal library (25) comprising an additional step c') of proposing the combination between the first combination (26) and the second combination (27) whose score of correspondence with the acquired combination of signals (70) is greater than a preset threshold when the acquired combination of signals (70) does not correspond to the first combination (26) or the second combination (27) in the signal library (25),
and wherein the first setpoint and/or the second setpoint is a velocity vector, a displacement or a force.

2. The control method as claimed in claim 1, wherein the glove (40) comprises a third (45) and/or a fourth (46) and/or a fifth finger (49) respectively provided with a third (46) and/or a fourth (48) and/or a fifth contact sensor (50), the signal library (25) comprising recorded combinations of signals (26-39) containing at least one signal of at least one of the third (46) and/or the fourth (48) and/or the fifth sensor (50).

3. The control method as claimed in claim 2, wherein the glove (40) also comprises a contact sensor (52) located on the palm of the glove (40).

4. The control method as claimed in one of the preceding claims, wherein the glove (40) also comprises means (54) for measuring an orientation of the glove (40).

5. The control method as claimed in claim 4, wherein the means (54) for measuring an orientation of the glove (40) comprise an inertial measurement unit (54).

6. The control method as claimed in one of the preceding claims, wherein at least one of the contact sensors (42, 44) comprises a pressure sensor.

7. The control method as claimed in one of the preceding claims, wherein the signal library (25) comprises a plurality of combinations of signals (27, 37, 28, 38) associated with the same setpoint.

8. The control method as claimed in any one of the preceding claims, wherein the preparatory step comprises a step of acquiring a first or a second combination of signals (26, 27) coming from the sensors (42, 44) of the glove (40) and a step of acquiring a first or a second setpoint (27, 28) applied to the manipulation robot (1).

9. The control method as claimed in claim 8, wherein the preparatory step comprises a step of controlling the manipulation robot (1) so that it reproduces the first or second setpoint (27, 28), followed by a step of validating the association of the combination of signals (26, 27) coming from the sensors (42, 44) of the glove (40) with the setpoint (27, 28) applied to the manipulation robot (1) .

10. A manipulation glove (40) comprising a first finger (41) provided with a first contact sensor (42) and a second finger (43) provided with a second contact sensor (44), as well as means (61) for functional connection to a control unit (20) arranged to carry out the method as claimed in any one of the preceding claims.

11. The manipulation glove (40) as claimed in claim 10, comprising a third (45) and/or a fourth (47) and/or a fifth finger (49) respectively provided with a third (46) and/or a fourth (48) and/or a fifth contact sensor (50), and/or a contact sensor (52) located on the palm of the glove (40) and/or an inertial measurement unit (54).

12. The manipulation glove (40) as claimed in one of claims 10 and 11, wherein the means (61) for functional connection to a control unit (20) comprise wireless communication means (61).

13. A device comprising a robot (1), a control interface having a manipulation glove (40) as claimed in one of claims 10 to 12 and a control unit (20) functionally connected to the manipulation interface and to the manipulation robot (1), the control unit (20) being arranged to carry out the control method as claimed in one of claims 1 to 9.

14. The device as claimed in claim 13, wherein the robot is a manipulation robot (1).

15. The device as claimed in claim 13, wherein the robot is an exoskeleton.
